# EUROPÄISCHE PATENTSCHRIFT

(11) **EP 2 865 091 B1**
(45) Veröffentlichungstag und Bekanntmachung des Hinweises auf die Patenterteilung: **04.09.2019**
(21) Anmeldenummer: 13742151.7
(22) Anmeldetag: 20.06.2013
(51) Int. Cl.: H02P 8/12, H02P 8/22, G06F 1/03

(54) **VERFAHREN UND SCHALTUNGSANORDNUNG ZUM ANSTEUERN EINES SCHRITTMOTORS**
METHOD AND CIRCUIT ARRANGEMENT FOR DRIVING A STEPPER MOTOR
PROCÉDÉ ET CIRCUIT POUR COMMANDER UN MOTEUR PAS À PAS

(30) Priorität: 20.06.2012 DE 102012105362
(43) Veröffentlichungstag der Anmeldung: 29.04.2015
(73) Patentinhaber: Trinamic Motion Control GmbH & Co. KG, 22769 Hamburg (DE)
(72) Erfinder: LARSSON, Lars, 20249 Hamburg (DE); DWERSTEG, Bernhard, 25462 Rellingen (DE)
(74) Vertreter: Heun, Thomas
(86) Internationale Anmeldenummer: PCT/DE2013/100225
(87) Internationale Veröffentlichungsnummer: WO 2013/189492

(56) Entgegenhaltungen:
- DE-A1- 19 524 118
- DE-A1- 19 842 698
- US-A1- 2010 141 199
- US-A1- 2011 055 303

## Beschreibung

Die Erfindung betrifft ein Verfahren und eine Schaltungsanordnung zum Ansteuern eines 2-, 3-oder Mehrphasen-Schrittmotors mit vorgegebenen Stromkurvenverläufen, insbesondere für einen Mikroschrittbetrieb.

Bei Schrittmotoren wird der Rotor durch ein gesteuertes, mit statischen Motorspulen erzeugtes und schrittweise rotierendes elektromagnetisches Feld schrittweise um jeweils einen kleinen Winkel gedreht. Schrittmotoren finden deshalb überall dort Anwendung, wo es auf eine genaue lineare oder Dreh-Positionierung eines Objektes ankommt. Darüber hinaus werden Schrittmotoren aber in zunehmendem Maße auch für reine Antriebszwecke verwendet, für die bisher zum Beispiel übliche Gleichstrommotoren eingesetzt wurden. Es sind zahlreiche verschiedene Bauformen von Schrittmotoren bekannt, wobei u. a. entsprechend der Anzahl der Motorspulen zwischen 2-, 3- und Mehrphasen-Schrittmotoren unterschieden wird.

Zum elektrischen Ansteuern von Schrittmotoren dienen zum Beispiel bekannte Chopper-Verfahren, mit denen aus einer zugeführten Motor-Versorgungsspannung für jede der Motorspulen die für jeden Zeitpunkt in diese entsprechend einer Stromvorgabe (Spulen-Sollstrom) jeweils einzuprägende Stromrichtung, Stromhöhe und Stromform mittels PWM-Strompulsen erzeugt wird, um mit dem dadurch induzierten, rotierenden Magnetfeld den Rotor des Motors anzutreiben.

Dabei besteht häufig der Wunsch, den Motor mit möglichst kleinen Schrittwinkeln drehen zu können, um eine möglichst hohe Auflösung bzw. Genauigkeit der Positionierung und einen gleichmäßigeren Drehmomentverlauf zu erzielen. Aus diesem Grunde wird anstelle des bekannten Vollschritt- und Halbschritt-Betriebes der so genannte Mikroschrittbetrieb bevorzugt, bei dem die durch die Motorspulen fließenden Ströme nicht nur ein- und ausgeschaltet werden, sondern in bestimmter Weise ansteigen und abfallen. Die Genauigkeit, mit der der Schrittmotor die Mikroschritte ausführt, hängt dabei im Wesentlichen davon ab, mit wie viel verschiedenen Stromamplituden die Motorspulen angesteuert werden und wie genau diese eingehalten werden können. Dabei ist eine sinusförmige bzw. cosinusförmige Erregung der Motorspulen im Allgemeinen am zweckmäßigsten, da damit auch ein sehr kontinuierliches, d.h. ruckfreies Drehen und somit ein ruhiger Motorlauf erzielt werden kann.

Bei bestimmten Anwendungen sind die Anforderungen an die Präzision des Gleichlaufes des Motors jedoch besonders hoch. Um diese Anforderungen erfüllen zu können, ist es erforderlich, den Kurvenverlauf des Stroms durch die Motorspulen für die Mikroschritterzeugung an die Motorgeometrie (d.h. an einen bestimmten Motortyp und dessen Parameter, gegebenenfalls auch an einen individuellen Motor) anzupassen. Die tatsächliche Realisierung dieser gewünschten optimalen Stromkurven kann dann z.B. durch eine Fourier-Synthese verschiedener Sinus- oder Dreiecks-Funktionen oder Mischungen daraus erfolgen.

Die auf diese Weise entstandenen Stromkurven sind üblicherweise stetig, jedoch nicht unbedingt monoton steigend oder monoton fallend. Allerdings sind typischerweise die vier Quadranten der Stromkurve aufgrund des symmetrischen Aufbaus der Motoren ebenfalls symmetrisch, so dass nur ein Viertel der Stromkurve gespeichert werden braucht.

Dennoch ist die Speicherung einer solchen Kurve insbesondere innerhalb eines monolithischen Schrittmotor-Ansteuer-ICs sehr aufwändig. Für jeden Mikroschritt des Motors ist eine Stützstelle der Stromkurve, d.h. ein Wert der Stromkurvenamplitude, abzuspeichern, wobei ein solcher Speicherplatz eine Zahl mit einer Genauigkeit entsprechend der Quantisierungsauflösung der Stromamplitudenwerte aufnehmen muss. Dies bedeutet bei z.B. 256 Mikroschritten in jedem Quadrant mit einer Auflösung von 256 diskreten Stromwerten für jeden Mikroschritt eine Zahl von 256^{∗}8 Bit. Eine im Vergleich zur Komplexität des digitalen Kerns eines üblichen SchrittmotorTreibers so hohe Anzahl von Speicherstellen für die Stromkurve lässt eine solche Realisierung bereits ab einer Auflösung von wenigen zehn Mikroschritten als zu dominant für die Komplexität des Baustein und damit als nicht marktgerecht erscheinen.

Eine alternative Realisierung eines Stromkurven-Speichers als RAM-Block ist erfahrungsgemäß nur sehr aufwändig in ein vorhandenes Chip-Design einzubauen und ungünstig in ein Chip-Layout zu integrieren, da ein RAM-Block als separater Layout-Block erscheint. Weiterhin erfordert ein RAM-Block in jedem Fall, dass ein Anwender die Mikroschritt-Tabelle beschreibt. Eine solche Tabelle kann jedoch nicht ohne Aufwand über Reset-Werte beispielsweise mit einer Sinusfunktion vorbesetzt werden. Dies wäre aber interessant, um die Universalität und Einfachheit des Bausteins auch für Anwendungen, in denen die Kurve nicht programmiert werden muss, aufrecht erhalten zu können.

Aus der US 2010/0141199 A1 ist eine Motor-Treiberschaltung bekannt, bei der Wellenform-Daten für eine Sinusförmige Motorstromkurve für eine halbe Periode der Sinuskurve in einem Speicher gespeichert werden. Zur Erzeugung einer vollständigen Stromkurve ist im Wesentlichen eine Polaritäts-Inverterschaltung für die Wellenform-Daten, ein Adresszähler mit u.a. einem Flag-bit zur Polaritätsumschaltung, und ein Generator für PWM-Strompulse vorgesehen.

Aus der DE 198 42 698 A1 ist eine Sollstromerzeugungsvorrichtung für Schrittmotoren bekannt, bei der Stützstellen für einen Sollstromverlauf in einem Speicher gespeichert und Zwischenwerte zwischen zwei Stützstellen zur Einsparung von Speicherplatz durch eine Interpolation erzeugt werden.

Der Erfindung liegt die Aufgabe zugrunde, ein Verfahren und eine Schaltungsanordnung zum Ansteuern eines 2-, 3- oder Mehrphasen-Schrittmotors zu schaffen, mit dem/der in relativ einfacher Weise und gleichzeitig mit hoher Genauigkeit ein gewünschter Verlauf der Amplituden der Stromkurven durch die Motorspulen realisiert werden kann, insbesondere wenn dieser Verlauf von der üblichen sinus- bzw. cosinus-Form abweicht.

Gelöst wird diese Aufgabe mit einem Verfahren gemäß Anspruch 1 und einer Schaltungsanordnung gemäß Anspruch 6.

Ein Vorteil dieser Lösung besteht darin, dass die Tabelle, die die zur Erzeugung der gewünschten Stromkurvenverläufe erforderlichen Daten enthält, nur eine auf etwa 15 bis 20% reduzierte Komplexität im Vergleich zu der oben genannten Speicherung der vollständigen Amplitudenwerte für jede Stützstelle des Stromverlaufes aufzuweisen braucht. Dadurch kann die Tabelle als Flip-Flop-Register im Digitalteil eines Schrittmotortreibers realisiert werden, und der Layout-Verschnitt durch einen separaten RAM-Block wird minimiert.

Ferner können mit dem offenbarten Verfahren und der offenbarten Ansteuerschaltung prinzipiell sämtliche stetigen Stromkurven-Verläufe, die für einen Schrittmotor relevant sein können, realisiert werden.

Schließlich ist die offenbarte Lösung auch insofern vorteilhaft, als die Stromamplitudenwerte in beiden Richtungen, d.h. für einen Rechts- und einen Linkslauf des Motors ausgelesen werden können.

Die Unteransprüche haben vorteilhafte Weiterbildungen der Erfindung zum Inhalt.

Weitere Einzelheiten, Merkmale und Vorteile der Offenbarung ergeben sich aus der folgenden Beschreibung von bevorzugten Ausführungsformen anhand der Zeichnung. Es zeigt:
- Fig. 1: einen typischen vorgegebenen Verlauf einer Stromkurve durch die Motorspulen eines Schrittmotors;
- Fig. 2: eine vergrößerte Darstellung des ersten Quadranten des Stromkurvenverlaufes gemäß Figur 1; und
- Fig. 3: ein beispielhaftes Blockschaltbild als Teil einer integrierten Schaltungsanordnung gemäß der Offenbarung.

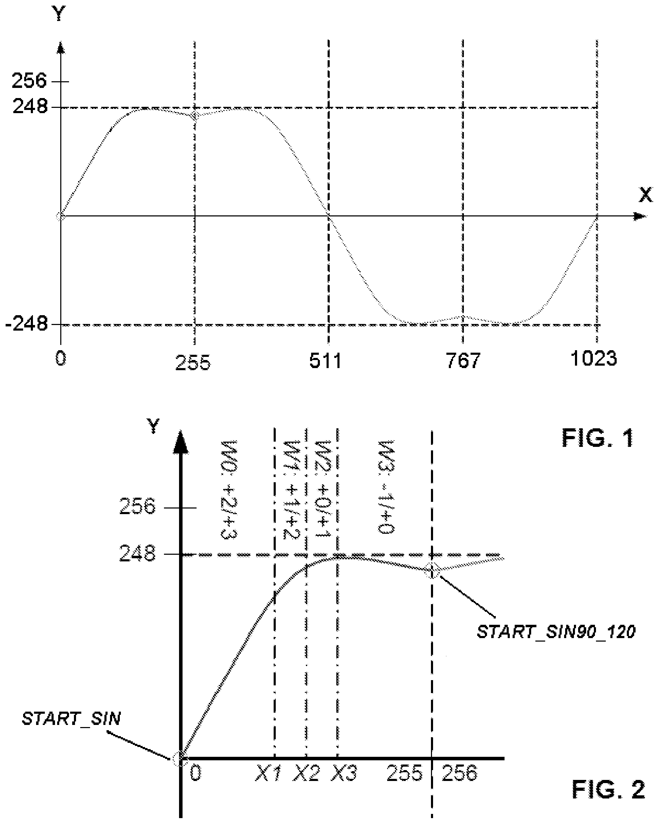

Figur 1 zeigt einen typischen zeitlichen Verlauf einer vorgegebenen Stromkurve (mit Stromamplitudenwerten Y über der Zeitachse X) über eine volle Periode zur Ansteuerung einer Phase eines Schrittmotors im Mikroschrittbetrieb, wenn erhöhte Anforderungen an die Präzision des Gleichlaufes des Motors gestellt werden. Die Kurve wird, wie eingangs bereits erwähnt wurde, durch Synthese verschiedener Sinus- und Dreiecksfunktionen oder Mischungen daraus in bekannter Weise so erzeugt, dass die an den Motorlauf oder die Positioniergenauigkeit gestellten Anforderungen erfüllt werden.

Die Kurve zeigt, dass solche Stromverläufe zwar im Allgemeinen stetig, im mathematischen Sinne aber nicht unbedingt monoton steigend oder monoton fallend sind. Wie bereits erwähnt wurde, kann davon ausgegangen werden, dass aufgrund des symmetrischen Aufbaus des Motors der Stromverlauf in den vier Quadranten einer Periode symmetrisch ist, so dass die gesamte Kurve nur für einen Quadranten ermittelt und abgespeichert werden muss und die Stromverläufe in den anderen Quadranten daraus mit einfachen Rechenoperationen durch symmetrische Spiegelungen ermittelt werden können.

Es sei gemäß Figur 1 beispielhaft angenommen, dass sich die Stromkurve entlang einer vollen Periode aus insgesamt 1024 Stützstellen zusammensetzt, wobei die zeitlichen Abstände (d.h. die Abstände entlang der X-Achse) zwischen zwei benachbarten Stützstellen vorzugsweise jeweils gleich groß sind und wobei jeder der Stützstellen 0 bis 1023 jeweils ein quantisierter Amplitudenwert Y des Stroms in der Weise zugeordnet ist, dass sich der in der Figur 1 gezeigte Stromkurvenverlauf ergibt. Gleichzeitig bedeutet dies, dass der Motor über eine volle Stromperiode 1024 Mikroschritte ausführt (Schrittauflösung), da mit jedem Stromwert an jeder Stützstelle ein Mikroschritt erzeugt wird. Ferner sei angenommen, dass die Stromamplituden maximal 256 diskrete positive oder (auf Grund der genannten Symmetrie) maximal 256 diskrete negative Werte annehmen können, womit im Allgemeinen ein vorgegebener Stromkurvenverlauf hinreichend genau erzeugt werden kann. Realisierbar sind aber natürlich auch andere Schritt- und Quantisierungsauflösungen.

Da aus den oben genannten Gründen der Stromkurvenverlauf nur in einem Quadranten betrachtet zu werden braucht, soll die Offenbarung anhand der vergrößerten Darstellung des ersten Quadranten der Stromkurve gemäß Figur 2 erläutert werden.

Sinngemäß gelten diese Erläuterungen aber natürlich auch für die anderen Quadranten und damit für den gesamten Stromkurvenverlauf.

In dem in Figur 2 gezeigten Quadranten befinden sich also 256 Stützstellen, wobei nur die Stützstelle 0 und die Stützstelle 255 bezeichnet ist.

Weiterhin ist gemäß Figur 2 der erste Quadrant des Stromkurvenverlaufes entlang der Zeitachse X in beispielhaft vier Segmente W0, W1, W2, W3 unterteilt. Die jeweilige zeitliche Länge der Segmente (die somit deren Anzahl bestimmt) wird so gewählt, dass innerhalb eines Segmentes die Steigung der Stromkurve an den einzelnen Stützstellen, d.h. die Anzahl von Quantisierungsstufen, um die sich der Amplitudenwert an einer Stützstelle von dem Amplitudenwert an einer benachbarten Stützstelle unterscheidet, nur relativ geringfügig von einer gewählten höchsten oder niedrigsten Basis- oder Grundsteigung des Stromkurvenverlaufes innerhalb dieses Segmentes abweicht, und zwar vorzugsweise nur in dem Umfang, dass diese Abweichung an den einzelnen Stützstellen jeweils durch einen 1-Bit-Wert (d.h. den Wert 0 oder 1) dargestellt werden kann, wobei der Wert 0 keine Abweichung und der Wert 1 eine Abweichung der Steigung bezeichnet, die um eine vorbestimmte feste Anzahl n von Quantisierungsstufen (n = 1, 2, 3,..) der Stromamplitude höher (bzw. niedriger) ist als die für dieses Segment festgelegte niedrigste (bzw. höchste) Basis- oder Grundsteigung. Grundsätzlich kann die Abweichung jedoch auch durch einen Mehr-Bit-Wert (zum Beispiel durch eine Binärzahl mit zwei oder mehr Stellen) dargestellt werden, um eine genauere Quantifizierung der Abweichung zu ermöglichen. Im folgenden wird jedoch davon ausgegangen, dass die Abweichung durch den oben genannten 1-Bit-Wert dargestellt wird.

Es wird also innerhalb jedes Segmentes W0, W1, W2, W3 zum Beispiel die dort jeweils vorhandene, geringste Steigung des Stromkurvenverlaufes an einer Stützstelle ermittelt und als Basis- oder Grundsteigung festgelegt. Dazu wird, wie oben erwähnt, der gewünschte Stromkurvenverlauf im Vorhinein berechnet und entsprechend der Quantisierungsauflösung (Auflösung der Amplitudenwerte) digitalisiert.

Ausgehend davon wird dann zu jeder Stützstelle in eine Tabelle der Wert 1 eingetragen, bei der der digitalisierte Amplitudenwert an dieser Stützstelle im Vergleich zum Amplitudenwert an der vorhergehenden Stützstelle um die vorbestimmte feste Anzahl n von Quantisierungsstufen höher ist als die Basis- oder Grundsteigung. Andererseits wird der Wert 0 eingetragen, wenn dies nicht der Fall ist, d.h. wenn der digitalisierte Amplitudenwert an dieser Stützstelle mit dem Amplitudenwert an der vorhergehenden Stützstelle zuzüglich der Basis- oder Grundsteigung übereinstimmt oder nur um eine Anzahl m < n von Quantisierungsstufen höher ist.

Umgekehrt wäre es auch möglich, innerhalb jedes Segmentes W0, W1, W2, W3 die dort jeweils vorhandene, höchste Steigung des Stromkurvenverlaufes an einer Stützstelle zu ermitteln und als Basis- oder Grundsteigung festzulegen und dann in die Tabelle zu jeder Stützstelle einen Wert 1 einzutragen, bei der der digitalisierte Amplitudenwert an dieser Stützstelle im Vergleich zum Amplitudenwert an der vorhergehenden Stützstelle um die vorbestimmte feste Anzahl n von Quantisierungsstufen niedriger ist als die Basis- oder Grundsteigung. Andererseits wird der Wert 0 eingetragen, wenn dies nicht der Fall ist, d.h. wenn der digitalisierte Amplitudenwert an dieser Stützstelle mit dem Amplitudenwert an der vorhergehenden Stützstelle zuzüglich der Basis- oder Grundsteigung übereinstimmt oder nur um eine Anzahl m < n von Quantisierungsstufen niedriger ist.

Somit braucht zu jeder Stützstelle nur jeweils ein 1-Bit-Wert in die Tabelle eingetragen zu werden, so dass anstelle des eingangs genannten Speichers von 256^{∗}8 Bit nur ein Speicher von 256^{∗}1 Bit erforderlich ist.

Dies bedeutet, dass die Länge der Segmente, d.h. die Anzahl von Stützstellen innerhalb eines Segmentes, im Falle der Festlegung der geringsten Steigung als Basis-oder Grundsteigung so bemessen werden muss, dass innerhalb eines Segmentes die Abweichung der Steigung an jeweils benachbarten Stützstellen von der Basis- oder Grundsteigung nicht größer ist als die vorbestimmte feste Anzahl n von Quantisierungsstufen und betragsmäßig auch nicht kleiner wird als die Basis- oder Grundsteigung selbst.

Umgekehrt muss die Länge der Segmente, d.h. die Anzahl von Stützstellen innerhalb eines Segmentes, im Falle der Festlegung der höchsten Steigung als Basis- oder Grundsteigung so bemessen werden, dass innerhalb eines Segmentes die Abweichung der Steigung an jeweils benachbarten Stützstellen von der Basis- oder Grundsteigung nicht kleiner ist als die vorbestimmte feste Anzahl n von Quantisierungsstufen und betragsmäßig auch nicht größer wird als die Basis- oder Grundsteigung selbst.

Somit sind also in den Bereichen des Stromkurvenverlaufes, die eine relativ starke Krümmung aufweisen (und in denen sich somit die Steigung relativ stark ändert), die Segmente relativ kurz, während in den Bereichen, in denen sich die Steigung nur geringfügig ändert, die Segmente relativ lang sein können.

Der tatsächliche digitale Wert Y der Stromamplitude an einer Stützstelle s ergibt sich dann im Falle der Festlegung der geringsten Steigung als Basis- oder Grundsteigung aus der Summe aus dem s-fachen der Basis- oder Grundsteigung W (die zum Beispiel zwei Quantisierungsstufen pro Stützstelle beträgt), plus der Anzahl von Werten 1, wobei diese Anzahl mit der Anzahl n der Quantisierungsstufen zu multiplizieren ist, und die ggf. zu den Stützstellen 0 bis s jeweils hinzu addiert wurden.

Im Falle der Festlegung der höchsten Steigung als Basis- oder Grundsteigung ergibt sich der tatsächliche digitale Wert Y der Stromamplitude an einer Stützstelle s aus der Summe aus dem s-fachen der Basis- oder Grundsteigung W (die zum Beispiel zwei Quantisierungsstufen pro Stützstelle beträgt), minus der Anzahl von Werten 1, wobei diese Anzahl mit der Anzahl n der Quantisierungsstufen zu multiplizieren ist, und die ggf. von den Stützstellen 0 bis s jeweils subtrahiert wurden.

In dem Beispiel der Figur 2 erstreckt sich das erste Segment W0 zwischen der Stützstelle 0 am Beginn des (ersten) Quadranten und einer Stützstelle X1, das zweite Segment W1 zwischen der Stützstelle X1 und einer Stützstelle X2, das dritte Segment W2 zwischen der Stützstelle X2 und einer Stützstelle X3 und das vierte Segment W3 zwischen der Stützstelle X3 und der Stützstelle 255 am Ende des (ersten) Quadranten.

Aus dem in Figur 2 dargestellten beispielhaften Stromkurvenverlauf wird auch deutlich, dass aufgrund der relativ geringen Veränderung bzw. hohen Konstanz der Steigung in dem ersten und vierten Segment W0, W3 diese Segmente relativ lang sind, während sich in dem zweiten und dritten Segment W1, W2 die Steigung in stärkerem Maße verändert bzw. die positive Steigung in eine negative Steigung übergeht, so dass diese Segmente entsprechend kürzer sind.

Beispielhaft beträgt gemäß Figur 2 die jeweils als niedrigste Steigung gewählte Basis- oder Grundsteigung W in dem ersten Segment W0: +2, in dem zweiten Segment W1: +1, in dem dritten Segment W2: 0 und in dem vierten Segment W3: -1.

Unter Berücksichtigung des genannten 1-Bit-Wertes (0 oder 1), der zu dieser Basis-oder Grundsteigung W hinzuzuaddieren ist, sowie einer oben genannten vorbestimmten festen Anzahl n = 1 von Quantisierungsstufen bedeutet dies also, dass sich in dem ersten Segment W0 die Stromamplitude zwischen zwei aufeinander folgenden, benachbarten Stützstellen um zwei oder um drei Quantisierungsstufen erhöht. In dem zweiten Segment W1 erhöht sich die Stromamplitude zwischen zwei aufeinander folgenden, benachbarten Stützstellen um eine oder um zwei Quantisierungsstufen, und in dem dritten Segment W2 zwischen null und einer Quantisierungsstufe. In dem vierten Segment W3 vermindert sich hingegen die Stromamplitude zwischen zwei aufeinander folgenden, benachbarten Stützstellen um eine Quantisierungsstufe oder sie bleibt unverändert.

Eine bevorzugte Weiterbildung trägt der Tatsache Rechnung, dass aufgrund dieser inkrementellen Codierung der Werte Y der Stromamplituden ein Fehler, der zum Beispiel bei einer Änderung der Tabelle während des Betriebes des Motors entstehen kann, zu einer Verfälschung der absoluten Werte der Stromamplituden führen würde. Um dieses zu verhindern, werden bevorzugt Initialisierungswerte bei bestimmten Stützstellen zusätzlich in der Tabelle gespeichert.

Wie in Figur 2 angedeutet ist, können solche Initialisierungswerte am Beginn jedes Quadranten liegen, wobei im Falle einer Sinus-Welle die Stromamplitude der ersten Stützstelle 0 stets den Wert 0 erhält.

In entsprechender Weise kann im Falle einer Cosinus-Welle bei einem 2-Phasen-Schrittmotor an der ersten Stützstelle 0 eine Initialisierung für den 90°-Wert erfolgen.

Wie bereits eingangs erwähnt wurde und in Figur 1 erkennbar ist, ist der Stromkurvenverlauf über die gesamte Periode symmetrisch, so dass sich die für den ersten Quadranten beschriebenen Abläufe in dem zweiten bis vierten Quadranten entsprechend symmetrisch wiederholen und durch einfache Rechenoperationen aus den in der Tabelle für den ersten Quadranten gespeicherten Werten ermittelt werden können.

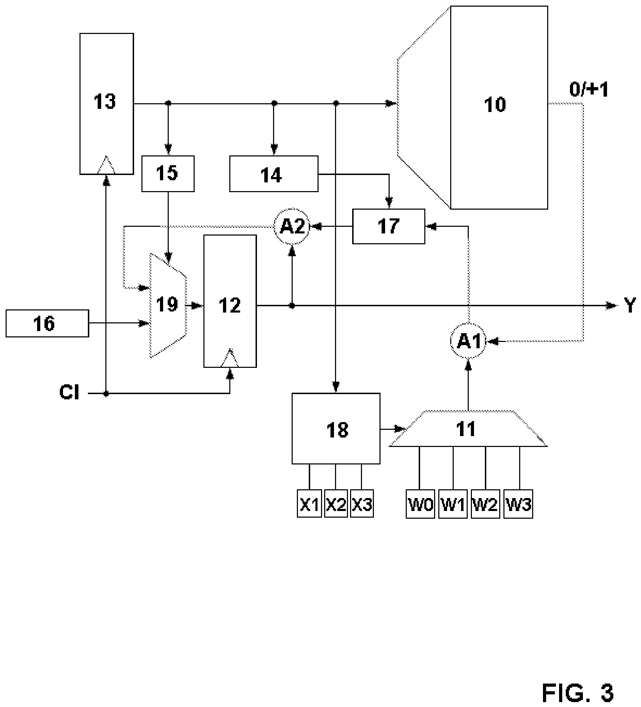

Figur 3 zeigt ein beispielhaftes vereinfachtes Blockschaltbild einer Schaltungsanordnung zur Erzeugung der Werte Y der Stromamplituden an jeder Stützstelle, d.h. für jeden Mikroschritt eines Schrittmotors, wobei die am Ausgang der Schaltung anliegenden Stromamplitudenwerte Y einem bekannten Stromregler bzw. einer bekannten Motor-Treiberschaltung zugeführt werden. Diese Schaltung betrifft beispielhaft den Fall, in dem als Basis- oder Grundsteigung die geringste Steigung innerhalb eines Segmentes und eine bevorzugte Anzahl n = 1 von Quantisierungsstufen festgelegt wurde. Für die anderen oben erläuterten Ausführungsformen bzw. Kombinationen von Basis- oder Grundsteigung mit der Anzahl n von Quantisierungsstufen kann die Schaltung entsprechend angepasst werden.

Der gewünschte, in Figur 1 beispielhaft dargestellte Verlauf der Stromamplitude durch die Motorspulen wird, wie oben erwähnt wurde, vorab in Abhängigkeit von bestimmten Motorparametern sowie den an den Gleichlauf des Motors gestellten sowie ggf. anderen Anforderungen ermittelt. Im Anschluss daran wird dann ein Quadrant des Stromamplitudenverlaufes gemäß obigen Erläuterungen in Segmente aufgeteilt, wobei die Anzahl und die Länge der einzelnen Segmente sowie die Basis-oder Grundsteigung innerhalb jedes Segmentes gemäß obigen Kriterien vorzugsweise mit einem entsprechenden Computerprogramm berechnet werden.

Die wesentlichen Komponenten der Schaltungsanordnung sind ein Tabellenspeicher 10, vorzugsweise in Form eines 256^{∗}1 Bit RAM im Falle von 256 Stützstellen bzw. Mikroschritten pro Quadrant des Stromkurvenverlaufes, ein Mikroschrittzähler 13, ein Speicher 16 für Startwerte, ein Mikroschrittregister 12, ein Segment-Komparator 18, ein erster Multiplexer 11 für die Basis- oder Grundsteigungen W0,...W3, ein zweiter Multiplexer 19 für Startwerte, ein erster und ein zweiter Addierer A1, A2, ein Multiplizierer 17 sowie ein erster und ein zweiter Vergleicher 14, 15. Über einen Eingang Cl wird der Schaltungsanordnung ein Schritt-Takt zugeführt, mit dem jeweils von einem Mikroschritt (bzw. einer Stützstelle des Stromkurvenverlaufes) zu einem nächsten Mikroschritt (bzw. einer nächsten Stützstelle) weiter geschaltet wird.

Der über den Eingang zugeführte Schritt-Takt Cl wird dem Mikroschrittzähler 13 zugeführt, der diese Takte zyklisch entsprechend der Anzahl der Stützstellen in jeder Stromkurvenperiode zählt, so dass der jeweilige Zählerstand jeweils eine der Stützstellen der Stromkurvenperiode bezeichnet.

Der aktuelle Zählerstand wird mit jedem Takt dem Tabellenspeicher 10 übermittelt. Daraufhin wird aus der in dem Tabellenspeicher 10 gespeicherten Tabelle derjenige 1-Bitwert (0 oder 1) ausgelesen, der der dem Zählerstand entsprechenden Stützstelle der Stromkurvenperiode durch die Tabelle zugeordnet ist.

Der Zählerstand wird ferner dem Segment-Komparator 18 zugeführt, mit dem ermittelt wird, innerhalb welches Segmentes W0,..Wn sich die betreffende, durch den Zählerstand repräsentierte Stützstelle befindet. Zu diesem Zweck wird der Zählerstand mit denjenigen gespeicherten Stützstellen X1,...Xn verglichen, die jeweils einen Übergang bzw. eine Grenze zwischen zwei Segmenten W0,...Wn darstellen. Mit dem Ausgangssignal des Segment-Komparators 18 wird der erste Multiplexer 11 so angesteuert, dass an dessen Ausgang die für das ermittelte Segment festgelegte Basis- oder Grundsteigung anliegt. Mit dem ersten Addierer A1 wird dann diese Basis- oder Grundsteigung zu dem aus dem Tabellenspeicher 10 ausgelesenen 1-Bit-Wert addiert und die Summe an den Multiplizierer 17 angelegt.

Der Zählerstand wird ferner einem ersten Vergleicher 14 zugeführt, mit dem ermittelt wird, ob sich die durch den Zählerstand repräsentierte Stützstelle in einem positiven oder einem negativen Quadranten des Stromkurvenverlaufes befindet.

Mit dem Ausgangssignal des ersten Vergleichers 14 wird der Multiplizierer 17 in der Weise angesteuert, dass die an seinem Eingang anliegende Summe mit dem Faktor 1 multipliziert wird, wenn sich die Stützstelle in einem positiven Quadranten befindet, und mit dem Faktor -1 multipliziert wird, wenn sich die Stützstelle in einem negativen Quadranten des Stromkurvenverlaufes befindet.

Die auf diese Weise mit einem Vorzeichen versehene Summe aus Basis- oder Grundsteigung und 1-Bit-Wert wird dann dem zweiten Addierer A2 zugeführt, mit dem diese Summe zu dem Ausgang des Mikroschrittregisters 12 addiert wird. Das Ausgangssignal des zweiten Addierers A2 wird dann über den zweiten Multiplexer 19 für Startwerte wieder dem Eingang des Mikroschrittregisters 12 zugeführt, um auf diese Weise durch Akkumulation bzw. Aufaddition den Stromamplitudenwert Y für die durch das zugeführte Schritt-Taktsignal repräsentierte Stützstelle des Stromkurvenverlaufes zu erzeugen.

Der zweite Multiplexer 19 für Startwerte dient dabei zu der oben erläuterten Initialisierung. Wenn zu Beginn einer Periode des Stromkurvenverlaufes (wieder) der erste Schritt-Takt an dem Schaltungseingang anliegt und somit der Stand des Mikroschrittzählers 13 (wieder) den Wert 1 annimmt, wird der zweite Multiplexer 19 durch den zweiten Vergleicher 15 so angesteuert, dass anstelle des Ausgangssignals des zweiten Addierers A2 ein in dem Speicher 16 gespeicherter Startwert über den zweiten Multiplexer 19 an den Eingang des Mikroschrittregisters 12 angelegt wird.

Die in Figur 3 gezeigte Schaltungsanordnung wird schließlich vorzugsweise noch mit einem zweiten Eingang versehen, der mit dem Mikroschrittzähler 13 verbunden ist, und über den dieser mittels eines zugeführten Schaltsignals zwischen einer Vorwärts- und einer Rückwärts-Zählrichtung umgeschaltet werden kann, um eine Drehrichtung des Motors in beiden Richtungen zu ermöglichen.

Die beschriebene Schaltungsanordnung wird vorzugsweise als Teil einer integrierten Ansteuerschaltung für 2-, 3- oder Mehrphasen-Schrittmotoren realisiert.

## Patentansprüche

1. Verfahren zum Ansteuern eines 2-, 3- oder Mehrphasen-Schrittmotors mit einem vorgegebenen Stromkurvenverlauf, wobei der Stromkurvenverlauf durch eine Mehrzahl von zeitlich voneinander beabstandeten und jeweils einen quantisierten Amplitudenwert darstellenden Stützstellen definiert ist, mit denen jeweils ein Mikroschritt des Schrittmotors realisiert wird, **dadurch gekennzeichnet, dass**
- der Stromkurvenverlauf zeitlich in eine erste Anzahl von Segmente (W0, W1,...Wn) unterteilt wird, die jeweils eine zweite Anzahl von Stützstellen beinhalten,
- innerhalb jedes Segmentes eine geringste oder eine höchste Basis- oder Grundsteigung festgelegt wird, mit der sich der Stromamplitudenwert des Stromkurvenverlaufes zwischen jeweils zwei benachbarten Stützstellen eines Segmentes mindestens erhöht bzw. höchstens erhöht,
- die zeitliche Länge der Segmente so gewählt wird, dass die Steigungen zwischen jeweils zwei benachbarten Stützstellen innerhalb eines Segmentes höchstens eine Abweichung von der festgelegten Basis- oder Grundsteigung voneinander aufweisen, die nicht größer ist als eine vorbestimmte dritte Anzahl n (n = 1, 2, ..) von Quantisierungsstufen, und
- in einer Tabelle zu jeder Stützstelle das Vorhandensein einer solchen Abweichung der Steigung von der festgelegten Basis- oder Grundsteigung des betreffenden Segmentes, in dem die Stützstelle liegt, gespeichert wird, wobei
- der Amplitudenwert des Stromkurvenverlaufes an einer Stützstelle s innerhalb eines Segmentes aus dem s-fachen der Basis- oder Grundsteigung plus bzw. minus dem Produkt aus einer vierten Anzahl von Stützstellen 0 bis s, für die jeweils eine Abweichung in der Tabelle gespeichert ist, und der dritten Anzahl n der Quantisierungsstufen ermittelt wird.

2. Verfahren nach Anspruch 1,
bei dem die Abweichung in Form eines 1-Bit-Wertes in der Tabelle gespeichert wird, der den Wert 1 aufweist, wenn die Steigung an der betreffenden Stützstelle um die vorbestimmte dritte Anzahl n von Quantisierungsstufen der Stromamplitude höher bzw. geringer ist als die festgelegte geringste bzw. höchste Basis- oder Grundsteigung, und andernfalls den Wert 0 aufweist.

3. Verfahren nach Anspruch 1,
bei dem die vorbestimmte dritte Anzahl n von Quantisierungsstufen gleich 1 ist.

4. Verfahren nach Anspruch 1,
bei dem für jede Stromkurvenperiode mindestens ein Initialisierungswert gespeichert wird, von dem ausgehend die Amplitudenwerte an den Stützstellen ermittelt werden.

5. Verfahren nach Anspruch 1,
bei dem in der Tabelle die Abweichungen der Steigung nur für die Stützstellen eines Quadranten des Stromkurvenverlaufes gespeichert werden und die Amplitudenwerte des Stromkurvenverlaufes in den übrigen Quadranten durch entsprechende symmetrische Spiegelung der für den einen Quadranten ermittelten Amplitudenwerte ermittelt werden.

6. Schaltungsanordnung zur Durchführung eines Verfahrens nach einem der Ansprüche 1 bis 5, wobei die Schaltungsanordnung beinhaltet:
- einen Tabellenspeicher (10), wobei in dem Tabellenspeicher (10) das Vorhandensein einer Abweichung der Steigung an jeder Stützstelle von einer festgelegten Basis- oder Grundsteigung des betreffenden Segmentes, in dem die betreffende Stützstelle liegt, gespeichert ist,
- einen Mikroschrittzähler (13), mit dem der Tabellenspeicher (10) zur sequentiellen Ausgabe der Abweichungen an den Stützstellen angesteuert wird,
- einen Segment-Komparator (18), wobei der Segment-Komparator (18) ein Segment ermittelt, in dem sich eine durch einen aktuellen Zählerstand des Mikroschrittzählers (13) repräsentierte Stützstelle des Stromkurvenverlaufes befindet,
- einen durch den Segment-Komparator (18) angesteuerten ersten Multiplexer (11), an dessen Eingängen jeweils eine der für jedes Segment festgelegte Basis- oder Grundsteigung anliegt, und
- einen ersten Addierer (A1), wobei der erste Addierer (A1) eine aus dem Tabellenspeicher (10) ausgegebene Abweichung an einer Stützstelle zu der an dem Ausgang des ersten Multiplexers (11) anliegenden Basis- oder Grundsteigung des Segmentes, in dem sich die Stützstelle befindet, addiert.

7. Schaltungsanordnung nach Anspruch 6,
mit einem Mikroschrittregister (12) und einem zweiten Addierer (A2) zur Addition des Ausgangssignals des Mikroschrittregisters (12) zu dem Ausgangssignal des ersten Addierers (A1), wobei das Ausgangssignal des zweiten Addierers (A2) an dem Eingang des Mikroschrittregisters (12) anliegt, zur Erzeugung des Wertes der Stromamplitude an einer Stützstelle s innerhalb eines Segmentes durch Mikroschrittweise Akkumulation des s-fachen der Basis- oder Grundsteigung des Segmentes plus bzw. minus dem Produkt aus einer vierten Anzahl von Stützstellen 0 bis s, für die jeweils eine Abweichung in der Tabelle gespeichert ist, und der dritten Anzahl n der Quantisierungsstufen.

8. Schaltungsanordnung nach Anspruch 6,
bei der der Tabellenspeicher (10) zur Speicherung der Abweichungen in Form eines 1-Bit-Wertes vorgesehen ist, der den Wert 1 aufweist, wenn die Steigung an der betreffenden Stützstelle um die vorbestimmte dritte Anzahl n von Quantisierungsstufen der Stromamplitude höher bzw. geringer ist als die festgelegte geringste bzw. höchste Basis- oder Grundsteigung, und andernfalls den Wert 0 aufweist.

9. Schaltungsanordnung nach Anspruch 6,
mit einem Speicher (16) für einen Initialisierungs- oder Startwert, von dem ausgehend die Amplitudenwerte an den Stützstellen ermittelt werden.

10. Integrierte Ansteuerschaltung zum Ansteuern eines 2-, 3- oder Mehrphasen-Schrittmotors mit einer Schaltungsanordnung nach einem der Ansprüche 6 bis 9.

## Claims

1. Method for driving a 2-, 3- or multi-phase stepper motor with a predetermined current curve profile, the current curve profile being defined by a plurality of support points which are spaced apart from one another in time and each represent a quantized amplitude value, with which support points each one microstep of the stepper motor is implemented, **characterized in that**:
- the current curve profile is divided in time into a first number of segments (W0, W1,...Wn) each containing a second number of support points,
- within each segment, a lowest or a highest base or basic gradient is defined, with which the current amplitude value of the current curve profile between two adjacent support points of a segment at least increases or at most increases,
- the time length of the segments is selected such that the gradients between each two adjacent support points within a segment have at most a deviation from the defined base or basic gradient from one another which is not greater than a predetermined third number n (n = 1, 2, ..) of quantization stages, and
- in a table for each support point, the presence of such a deviation of the gradient from the defined base or basic gradient of the segment in which the support point is located is stored, wherein
- the amplitude value of the current curve profile at a support point s within a segment is determined from s times the base or basic gradient plus or minus the product of a fourth number of support points 0 to s, for which each a deviation is stored in the table, and the third number n of the quantization stages.

2. Method according to claim 1,
in which the deviation is stored in the table in the form of a 1-bit value having the value 1 if the gradient at the respective support point is higher or lower than the defined lowest or highest base or basic gradient, respectively, by the predetermined third number n of quantization stages of the current amplitude and otherwise has the value 0.

3. Method according to claim 1,
in which the predetermined third number n of quantization stages is equal to 1.

4. Method according to claim 1,
in which for each current curve period at least one initialization value is stored, from which the amplitude values at the support points are determined.

5. Method according to claim 1,
in which the deviations of the gradient are stored in the table only for the support points within one quadrant of the current curve profile, and the amplitude values of the current curve profile in the other quadrants are determined by corresponding symmetrical mirroring of the amplitude values determined for the one quadrant.

6. Circuit arrangement for conducting a method according to any one of claims 1 to 5, said circuit arrangement comprising:
- a table memory (10), the table memory (10) storing the presence of a deviation of the gradient at each support point from a predetermined base or basic gradient of the respective segment in which the respective support point is located,
- a microstep counter (13) with which the table memory (10) is driven for sequential output of the deviations at the support points,
- a segment comparator (18), the segment comparator (18) determining a segment in which a support point of the current curve profile represented by a present counter reading of the microstep counter (13) is located,
- a first multiplexer (11) which is driven by the segment comparator (18) and at the inputs of which each one of the base or basic gradient defined for each segment is applied, and
- a first adder (A1), the first adder (A1) adding a deviation which is output from the table memory (10) at a support point, to the base or basic gradient, present at the output of the first multiplexer (11), of the segment in which the support point is located.

7. Circuit arrangement according to claim 6,
comprising a microstep register (12) and a second adder (A2) for adding the output signal of the microstep register (12) to the output signal of the first adder (A1), the output signal of the second adder (A2) being applied to the input of the microstep register (12), for generating the value of the current amplitude at a support point s within a segment by microstepwise accumulation of s times the base or basic gradient of the segment plus or minus the product of a fourth number of support points 0 to s, for each of which a deviation is stored in the table, and the third number n of quantization stages.

8. Circuit arrangement according to claim 6,
in which the table memory (10) is provided for storing the deviations in the form of a 1-bit value which has the value 1 if the gradient at the respective support point is higher or lower than the defined lowest or highest base or basic gradient, respectively, by the predetermined third number n of quantization stages of the current amplitude and otherwise has the value 0.

9. Circuit arrangement according to claim 6,
comprising a memory (16) for an initialization or start value from which the amplitude values at the support points are determined.

10. Integrated control circuit for controlling a 2-, 3- or multi-phase stepper motor, comprising a circuit arrangement according to any one of claims 6 to 9.

## Revendications

1. Procédé d'entraînement d'un moteur pas à pas biphasé, triphasé ou multiphasé avec un profil de courbe de courant prédéterminé, le profil de courbe de courant étant défini par une pluralité de points d'appui espacés les uns des autres dans le temps et représentant chacun une valeur d'amplitude quantifiée, avec lesquels des points d'appui chaque micropas du moteur pas à pas sont mis en oeuvre, **caractérisé en ce que**:
- le profil de courbe de courant est divisé dans le temps en un premier nombre de segments (W0, W1,...Wn) contenant chacun un deuxième nombre de points d'appui,
- à l'intérieur de chaque segment est défini un base ou un gradient de base le plus bas ou le plus haut, avec lequel la valeur d'amplitude de courant du profil de courbe de courant entre deux points d'appui adjacents d'un segment augmente au moins ou au maximum augmente,
- la durée des segments est choisie de telle sorte que les gradients entre chacun des deux points d'appui adjacents à l'intérieur d'un segment présentent au plus un écart par rapport à la base ou gradient de base définie l'un de l'autre qui n'est pas supérieur à un prédéfini troisième nombre n (n = 1, 2, ..) d'étapes de quantification, et
- dans un tableau pour chaque point d'appui, la présence d'un tel écart du gradient par rapport à la base ou gradient de base défini du segment dans lequel se trouve le point d'appui est enregistrée, où
- la valeur d'amplitude du profil de courbe de courant en un point d'appui s à l'intérieur d'un segment est déterminée à partir de s fois la base ou le gradient de base plus ou moins le produit d'un quatrième nombre de points d'appui 0 à s, pour chacun desquels un écart est enregistré dans le tableau, et le troisième nombre n des étapes de quantification.

2. Procédé selon la revendication 1,
dans laquelle l'écart est mémorisé dans le tableau sous la forme d'une valeur de 1 bit ayant la valeur 1 lorsque le gradient au point d'appui respectif est supérieur ou inférieur au de base ou gradient de base le plus bas ou le plus haut défini, respectivement, par le troisième nombre prédéfini n d'étages de quantification de l'amplitude actuelle et a sinon la valeur 0.

3. Procédé selon la revendication 1,
dans laquelle le troisième nombre prédéterminé n d'étapes de quantification est égal à 1.

4. Procédé selon la revendication 1,
dans laquelle au moins une valeur d'initialisation est mémorisée pour chaque période de courbe en cours, à partir de laquelle les valeurs d'amplitude aux points d'appui sont déterminées.

5. Procédé selon la revendication 1,
dans laquelle les écarts du gradient ne sont mémorisés dans le tableau que pour les points d'appui à l'intérieur d'un quadrant du profil de courbe actuel et les valeurs d'amplitude du profil de courbe actuel dans les autres quadrants sont déterminées par un miroir symétrique en étalement corrélé des valeurs d'amplitude déterminées pour d'un quadrant.

6. Agencement de circuit pour conduire un procédé selon l'une quelconque des revendications 1 à 5, ledit montage de circuit comprenant:
- une mémoire de table (10), la mémoire de table (10) mémorisant la présence d'un écart du gradient à chaque point de support par rapport à une base ou à un gradient de base prédéterminée du segment respectif dans lequel le point de support respectif est situé,
- un compteur à micropas (13) avec lequel la mémoire de table (10) est entraînée pour la sortie séquentielle des écarts du gradient aux points d'appui,
- un comparateur de segments (18), le comparateur de segments (18) déterminant un segment dans lequel se trouve un point d'appui du profil de courbe de courant représenté par une valeur de compteur actuelle du compteur de micropas (13),
- un premier multiplexeur (11) qui est commandé par le comparateur de segments (18) et aux entrées duquel chacun base ou des gradients de base définis pour chaque segment est appliqué, et
- un premier additionneur (A1), le premier additionneur (A1) ajoutant un écart qui est sorti de la mémoire de table (10) en un point de support, à la base ou gradient de base, présent à la sortie du premier multiplexeur (11), du segment dans lequel le point de support est situé.

7. Agencement de circuit selon la revendication 6,
comprenant un registre à micropas (12) et un second additionneur (A2) pour ajouter le signal de sortie du registre à micropas (12) au signal de sortie du premier additionneur (A1), le signal de sortie du second additionneur (A2) étant appliqué sur l'entrée du registre à micropas (12), pour générer la valeur de l'amplitude du courant en un point d'appui s à l'intérieur d'un segment par accumulation par micropas de s fois la base ou le gradient de base du segment plus ou moins le produit d'un quatrième nombre de points d'appui 0 à s, pour chacun desquels un écart est enregistré dans le tableau, et le troisième nombre n de pas de quantification.

8. Agencement de circuit selon la revendication 6,
dans laquelle la mémoire de table (10) est prévue pour mémoriser les écarts sous la forme d'une valeur de 1 bit qui a la valeur 1 si le gradient au point d'appui respectif est supérieur ou inférieur au de base ou gradient de base le plus bas ou le plus haut défini, respectivement, par le troisième nombre prédéterminé n d'étages de quantification de l'amplitude actuelle et a sinon la valeur 0.

9. Agencement de circuit selon la revendication 6,
comprenant une mémoire (16) pour une valeur d'initialisation ou de démarrage à partir de laquelle les valeurs d'amplitude aux points de support sont déterminées.

10. Circuit de commande intégré pour commander un moteur pas à pas biphasé, triphasé ou multiphasé, comprenant un agencement de circuit selon l'une quelconque des revendications 6 à 9.
